# EUROPEAN PATENT SPECIFICATION

(11) **EP 1 470 552 B1**
(45) Date of publication and mention of the grant of the patent: **02.12.2009**
(21) Application number: 02806673.6
(22) Date of filing: 05.10.2002
(51) Int. Cl.: G11B 23/02

(54) **DISK CARTRIDGE**
DATENTRÄGERKASSETTE
CARTOUCHE DE DISQUE

(30) Priority: 01.02.2002 KR 2002005878
(43) Date of publication of application: 27.10.2004
(73) Proprietor: SAMSUNG ELECTRONICS CO., LTD., Suwon-si, Gyeonggi-do 442-742 (KR)
(72) Inventor: CHOI, Han-kook, 202-1501 Jugong Greenville A.1260, 442-370 Gyeongg i-do (KR); LEE, Yong-hoon, 702-1401 Salgugol 7-danjiJinduk, Suwon-si, 442-470 Gyeonggi-do (KR); YIM, Hong-kyun, 432-403 Jugong 4-danji Apt., 442-370 Gyeonggi-do (KR); EUM, Jae-yong, 915-601 Jugong Apt., 970-3, Suwon-si, 442-370 Gyeonggi-do (KR)
(74) Representative: Kohler, Janet Wendy
(86) International application number: PCT/KR2002/001856
(87) International publication number: WO 2003/065371

(56) References cited:
- WO-A-02/056313
- JP-A- 6 215 466
- JP-U- 61 006 974
- KR-A- 2001 082 025
- US-A- 4 471 397
- US-A- 5 278 717

## Description

### Technical Field

The present invention relates to a disk cartridge, and more particularly, to a disk cartridge for storing a disk as an information recording/reproducing medium to protect the recording surface of the disk from contamination sources such as dusts and fingerprints.

### Background Art

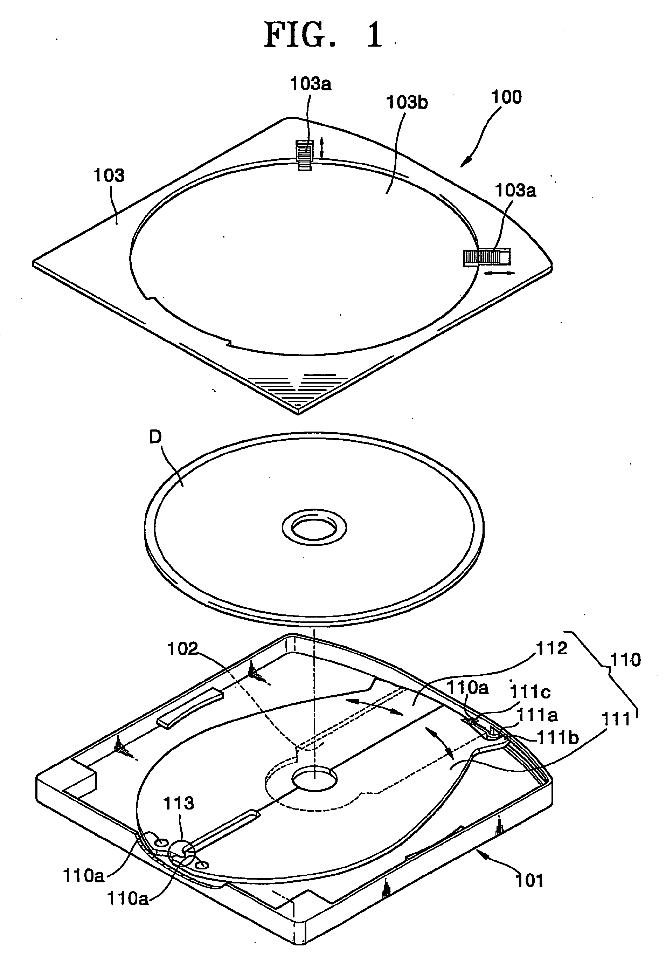

Generally, a disk cartridge storing a disk as an information recording/reproducing medium is mounted in a disk drive apparatus. With reference to FIG. 1, a disk cartridge has a case 101 for storing a disk D, a shutter 110 which is installed and rotated in the case 101 to selectively open or close an aperture 102 on the case 101 so that a pickup (not shown) of a disk drive apparatus accesses the disk D, and a cover 103 fixed on the upper portion of the case 101. Reference numeral 103b denotes an opening formed on the cover 103 to replace the disk D, and reference numeral 103a denotes separation prevention levers which are installed and slid on the cover 103 to prevent the disk D from being separated through the opening 103b. Consequently, in order to mount a disk D, the separation prevention levers 103a move backward not to interfere with the disk D. After the disk D has been mounted, the separation prevention levers 103a move forward, as shown in FIG. 1, so that the front ends of the separation prevention levers 103a prevents the disk D from being separated through the opening 103b.

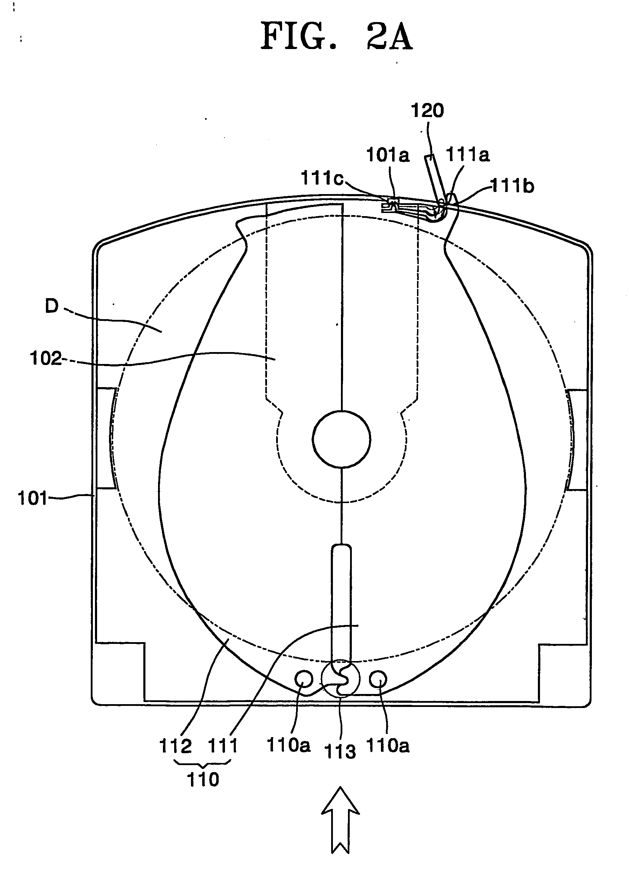

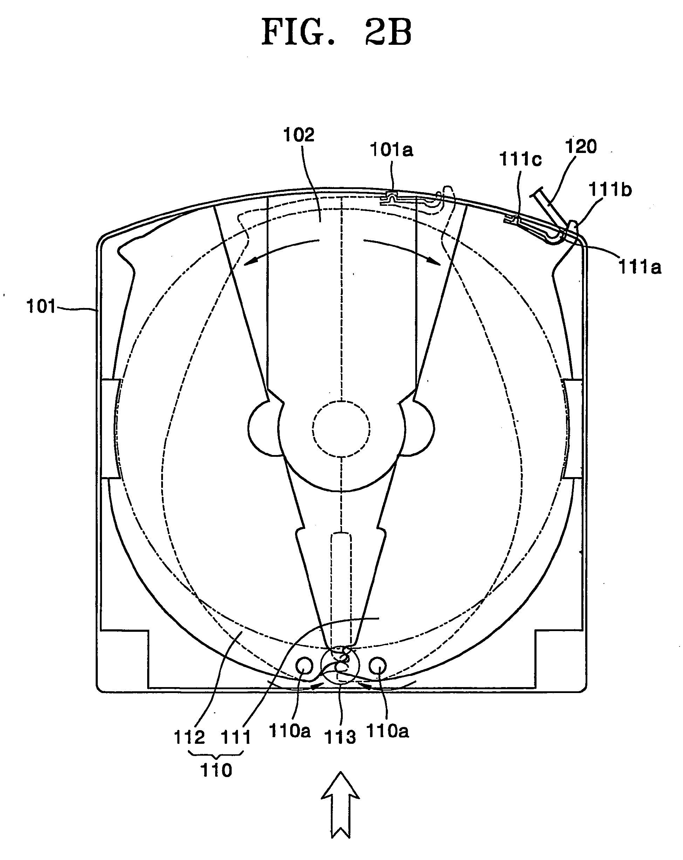

Referring to FIG. 2A, when a disk cartridge 100 storing a disk D is introduced into a disk drive apparatus, an opening lever of the disk drive apparatus pushes a locking piece 111 a to release a protrusion 111c of the shutter 110 from a groove 101a of the case 101. Sequentially, the opening lever 120 pushes an interference piece 111b to rotate the shutter 110 as shown in FIG. 2B. In this case, the shutter 110 is formed of first and second shutter units 111 and 112, which are installed and rotated on rotation shafts 110a, and engage each other by an interlock saw tooth portion 113. Therefore, when the first shutter unit 111 integrally connected to the interference piece 111b rotates in a clockwise direction, the second shutter unit 112 rotates in a counterclockwise direction so that the first and second shutter units 111 and 112 open the aperture 102. Thus, a pickup (not shown) of the disk drive apparatus accesses the recording surface of the disk D through the aperture 102 to record/reproduce information. Although not shown in the drawings, a torsion spring is installed on the rotation shaft 110a, between the first shutter unit 111 and the surface of the case 101 to elastically bias the first shutter unit 111 in a counterclockwise direction, i.e., in a direction for closing the aperture 102. Consequently, when the force applied to the opening lever 120 is removed, the shutter 110 returns to a closed state.

In such a structure, a force applied to the shutter 110 through the aperture 102 easily deforms the shutter 110 when the shutter 110 is closed. In other words, since only one end of the shutter 110 is coupled to the rotation shafts 110a, while a user pushes the other side of the shutter 110 through the aperture 102, the shutter 110 may be deformed. Accordingly, the shutter 110 is not smoothly opened or closed and a gap may occur between the first and second shutter units 111 and 112 so that the shutter 110 cannot properly perform as a shutter.

In addition, since the shutter 110 is installed in the case 101 to mount the disk D on the shutter 110, the recording surface of the disk D, i.e., the lower surface of the disk in the drawings, may contact the shutter 110 in opening and closing of the shutter 110. Thus, scratches may occur on the recording surface of the disk D.

Accordingly, a structure for preventing deformation of the shutter 110 and protecting the recording surface of the disk D in opening and closing operations of the shutter 110 is required.

US-A-5,278,717 discloses a disk cartridge provided with a shutter movably installed on the case and disposed under the disk to open/shut the pickup insertion holes formed on the case. This document provides basis for the pre-characterising portion of independent claim 1 appended hereto.

Document KR 2001-085025 discloses the preamble of claim 1 and in addition a shutter comprising two guide slots in which pins of the case are accommodated.

### Detailed description of the Invention

To solve the above-described problems, it is an objective of the present invention to provide a disk cartridge for stably storing a disk by preventing the deformation of a shutter by external force.

According to the present invention there is provided an apparatus and method as set forth in the appended claims. Preferred features of the invention will be apparent from the dependent claims, and the description which follows.

To accomplish the above objective of the present invention, there is provided a disk cartridge including a case in which a disk is stored; a cover installed on the case and having an opening opened to outside; a shutter movably installed in the case between said disk and said case to open and close an aperture formed in the case, characterised by the disk cartridge comprising: elongated guide holes formed in the case along the trace of the shutter and having peripheral positions; support members formed on the shutter to be guided into the elongated guide holes and having an enlarged top end which extends over the peripheral portions of the guide holes in order to interfere with said peripheral portions, thereby preventing a movement of the shutter toward the disk.

### Brief Description of the Drawing

FIG. 1 is a perspective view of a conventional disk cartridge;
FIGS. 2A and 2B are plan views illustrating open and closed states of a shutter of the disk cartridge of FIG. 1;
FIG. 3 is an exploded perspective view of a disk cartridge according to the present invention;
FIG. 4 is a perspective view of the disk cartridge of FIG. 3;
FIG. 5 is a plan view illustrating the closed state of a shutter of the disk cartridge shown in FIG. 3;
FIG. 6 is a plan view illustrating the open state of a shutter of the disk cartridge shown in FIG. 3;
FIG. 7 is a sectional view of the disk cartridge according to the present invention along cutting plane line A-A' shown in FIG. 5;
FIG. 8 is a sectional view of the disk cartridge according to the present invention along cutting plane line B- B' shown in FIG. 5; and
FIG. 9 is a sectional view of the disk cartridge according to the present invention along cutting plane line C- C' shown in FIG. 6.

### Best mode for carrying out the Invention

The present invention will now be described in more detail with reference to the accompanying drawing.

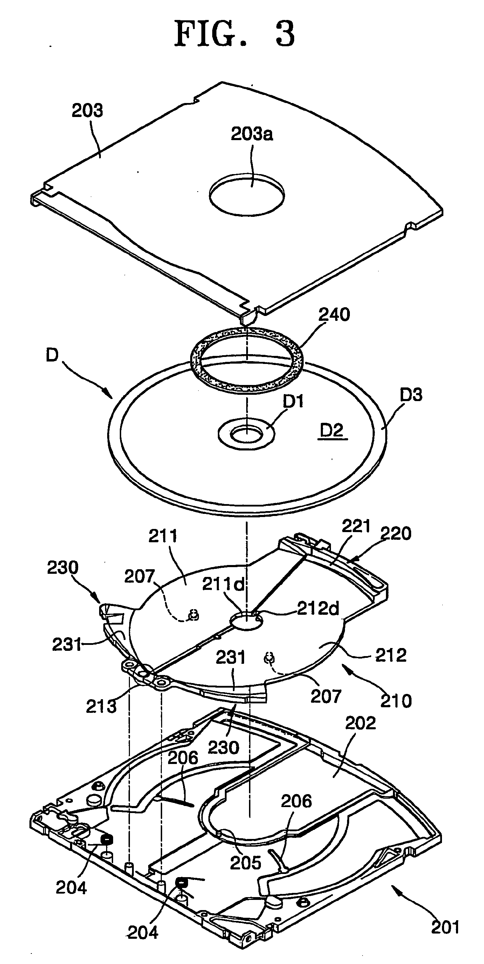

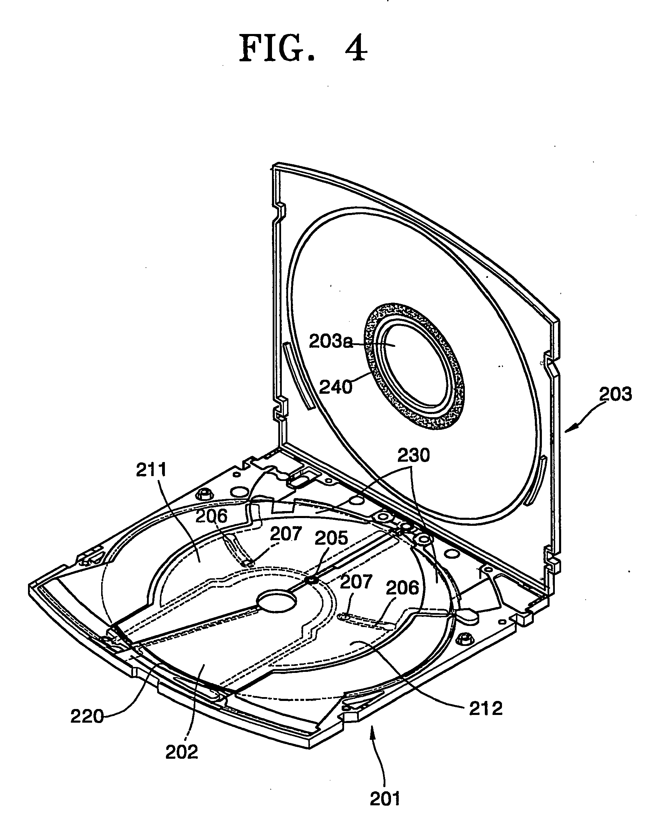

FIGS. 3 and 4 are exploded and assembled perspective views of a disk cartridge according to the present invention.

Referring to FIGS. 3 and 4, a disk cartridge includes a case 201 for storing a disk D, a shutter 210 located under the disk D to open and close an aperture 202 of the case 201, and a cover 203 for covering the upper surface of the case 201. Reference numeral 240 denotes an unwoven fabric as a sealing member attached around an opening 203a of the cover 203.

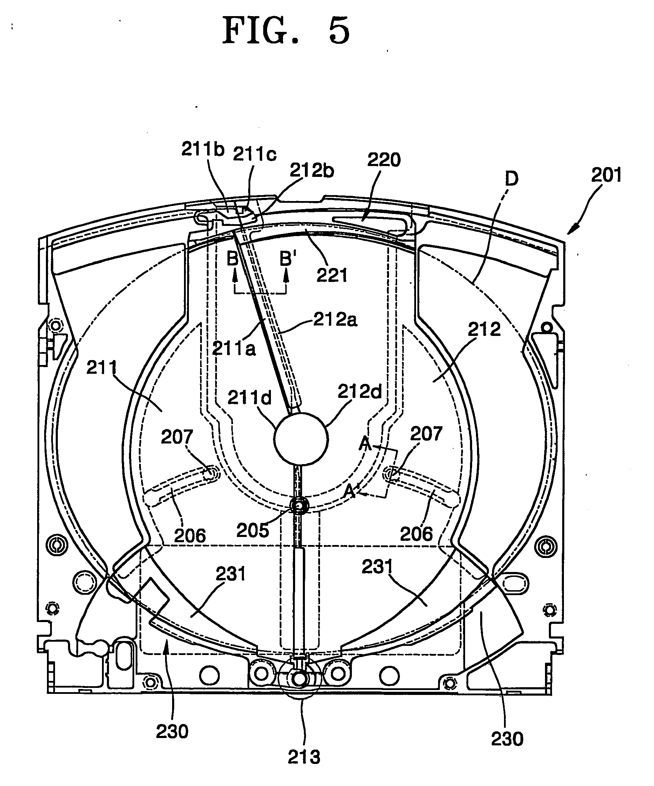

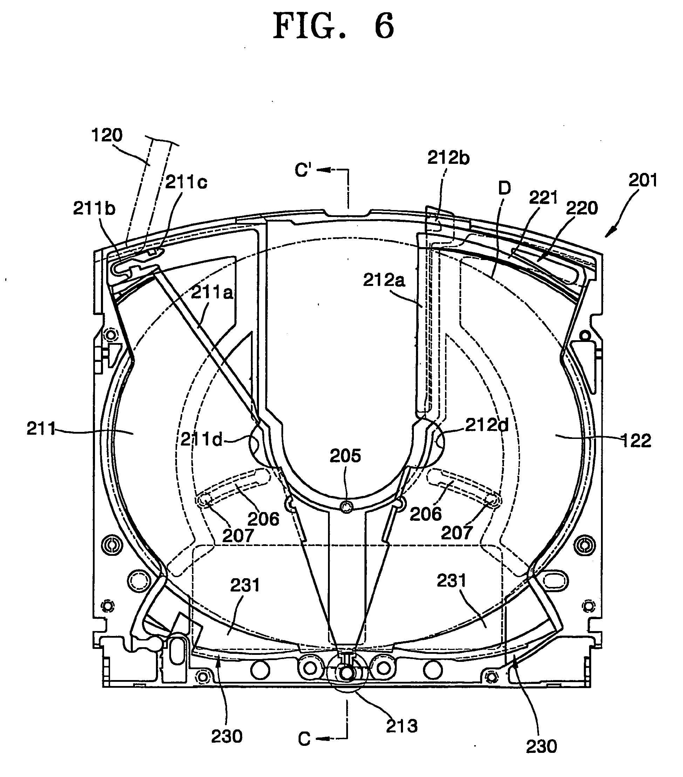

The shutter 210 is formed of first and second shutter units 211 and 212, symmetrically rotating in the case 201. Accordingly, when the first and second shutter units 211 and 212 rotate in an opening direction, the aperture 202 is open as shown in FIG. 6. In contrast, when the first and second shutter units 211 and 212 rotate in a closing direction, the aperture 212 is closed as shown in FIG. 5. Reference numeral 213 denotes an interlock saw tooth portion for connecting and interlocking the first and second shutter units 211 and 212. Consequently, when the first shutter unit 211 rotates, the second shutter unit 212 rotates in a symmetric direction with the first shutter unit 211 due to the interlock saw tooth portion 213. In addition, torsion springs 204 are installed between the surface of the case 201 and the first and second shutter units 211 and 212 to elastically bias the first and second shutter units 211 and 212 in a direction of closing the aperture 202. Thus, when force applied from an opening lever 120 (refer to FIG. 6) is removed, the torsion springs 204 return the shutter 210 to a closed state.

Protrusion portions 220 and 230 are formed on the first and second shutter units 211 and 212 to contact with a rim portion D3 of the disk D. Here, the disk D is formed of a clamp region D1 at an internal circumference side of the disk D, an information region D2 on which information is recorded, and the outer rim portion D3 at the outside of the information region D2. The protrusion portions 220 and 230 support the rim portion D3 as a non-information region to prevent the contact between the information region D2 and the shutter 210. In addition, the protrusion portions 220 and 230 include slant surfaces 221 and 231 slanting toward a region on which the disk D will be mounted. Thus, when the first and second shutter units 211 and 212 are closed as shown in FIG. 5, the protrusion portions 220 and 230 support the rim portion D3 of the disk D. However, when the first and second shutter portions 211 and 212 are open as shown in FIG. 6, the disk D is lowered along the slant surfaces 221 and 231 so that a protrusion 205 on the case 201 supports the clamp region D1 of the disk D. As shown in FIG. 5, when the disk D is elevated as the shutter 210 is closed, the rim portion D3 of the disk D is attached to the unwoven fabric 240 as a sealing member. Accordingly, a gap between the cover 203 and the rim portion D3 of the disk D is blocked to efficiently prevent dusts from entering into the disk cartridge. In this case, a soft material, such as rubber, which is elastically transformed by receiving a force from the disk D, can be substituted for the unwoven fabric 240.

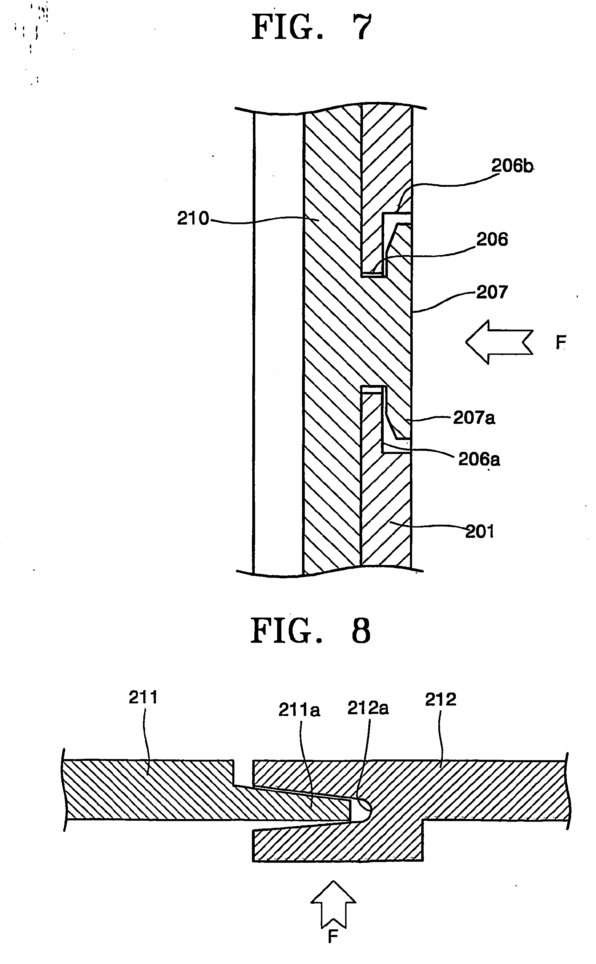

Support members 207 arranged on the lower surface of the first and second shutter units 211 and 212, i.e., the opposite surface from the surface on which the disk D is mounted, are guided into guide holes 206 on the case 201. Here, the guide holes 206 are formed along the trace of the support members 207 when rotating the first and second shutter units 211 and 212. Accordingly, when opening and closing the first and second shutter units 211 and 212, the support members 207 slide along the guide holes 206. In addition, as shown in FIG. 7, peripheral portions 206a of the guide holes 206 interfere in ends 207a of the support members 207 passed through the guide holes 206. Accordingly, even when an external force is applied to the shutter 210 in an F arrow direction, the shutter 210 is not deformed into the case 201 due to the peripheral portions 206a of the guide holes 206 interfering in the ends 207a of the support members 207. Here, the ends 207a of the support members 207 may be constituted to protrude from the case 201; however, it is preferable that receiving portions 206b connecting to the guide holes 206 are arranged in the case 201 not to protrude the ends 207a of the support members 207 from the case 201.

As shown in FIG. 8, a coupling protrusion 211a and a coupling groove 212a are formed at the contact portions of the first and second shutter units 211 and 212 to couple each other. The coupling protrusion 211 a and the coupling groove 212a integrally combine the upper sides of the first and second shutter units 211 and 212 when the first and second shutter units 211 and 212 are attached in closing the aperture 202. Therefore, even when an external force is applied in an F arrow direction, the first and second shutter units 211 and 212 are not easily deformed. Since the first and second shutter units 211 and 212 are complementary to each other, a coupling protrusion may be formed on the second shutter unit 212 while a coupling groove may be formed on the first shutter unit 211.

The size of an opening 203a of the cover 203 is smaller than the diameter of the disk D to prevent the disk D from being separated through the opening 203a. In order to replace the disk D, the cover 203 is rotated with respect to a rotation shaft to open the cover 203 as shown in FIG. 4. Thereafter, the disk D in the case 201 is withdrawn and a new disk is mounted in the case 201. Reference numeral 211b in FIG. 5 denotes a locking piece on the first shutter unit 211. Here, the locking piece 211 has a locking hook 211 c at one end to elastically couple with a locking groove 212b of the second shutter unit 212 when closing the aperture 202.

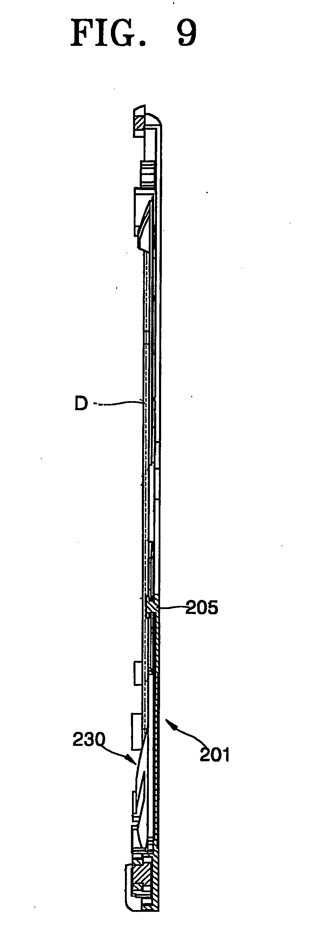

A disk cartridge including a disk D is introduced into a disk drive apparatus while the shutter 210 and the cover 203 are closed as shown in FIG. 5. When the disk cartridge is introduced into the disk drive apparatus, the opening lever 120 of the disk drive apparatus pushes the locking piece 211 b to release the locking hook 211 c from the locking groove 212b. Subsequently, the opening lever 120 pushes the locking piece 211 b to rotate the first shutter unit 211 in a counterclockwise direction of FIG. 6. Consequently, the second shutter unit 212 rotates in a clockwise direction by the interlock saw tooth portion 213, thereby opening the aperture 202. In this case, the protrusion portions 220 and 230 of the first and second shutter units 211 and 212 contact the rim portion D3 of the disk D. Thus, the information region D2 on the recording surface of the disk D is not damaged in opening and closing of the shutter 210. When the shutter 210 is open, the disk D is lowered along the slant surfaces 221 and 231 of the protrusion portions 220 and 230 to be temporarily supported by the protrusion 205 and the slant surfaces 221 and 231, as shown in FIGS. 6 and 9. A disk drive turntable (not shown) of the disk drive apparatus is introduced through the aperture 202 and a clamper (not shown) is introduced through the opening 203a of the cover 203 to clamp the disk D supported by the protrusion 205 and the slant surfaces 221 and 231. Thereafter, the turntable rotates to record and reproduce information on and from the disk D.

When recording/reproducing operation has finished and the turntable and the clamper have released the disk D, the protrusion 205 and the slant surfaces 221 and 231 support the non-information regions D1 and D3 of the disk, respectively. When the disk cartridge is withdrawn from the disk drive apparatus, the first and second shutter units 211 and 212 return to the original positions to close the aperture 202. In this case, the rim portion D3 of the disk D is elevated along the slant surfaces 221 and 231 of the protrusion portions 220 and 230 as shown in FIG. 5. Since the shutter 210 does not contact the information region D2 of the disk D in the closing operation, the information region D2 is not damaged. In addition, the rim portion D3 of the disk D is attached to the peripheral of the opening 203a of the cover 203 with the unwoven fabric 240 therebetween so that foreign material, such as dust, is not likely inserted into the disk cartridge through a gap between the disk D and the cover 203.

Moreover, the coupling protrusion 211 a and the coupling groo ve 212a of the first and second shutter units 211 and 212 are coup led when the shutter 210 is closed and the peripheral portions 206a of the guide holes 206 interfere in the ends 207a of the support members 207. Consequently, the shutter 210 is not pushed inside even when the shutter 210 is pushed into the case 201 through the aperture 202. As a result, the shutter 210 is prevented from bein g deformed and the aperture 202 is firmly closed.

Further, the size of the opening 203a is smaller than the diameter of the disk D and the cover 203 rotates to open and close the case 201. Thus, the disk D is prevented from being separated through the opening 203a without installing separation prevention levers 103a (reefer to FIG. 1). Openings of various shapes other than circular can be formed to prevent the separation of the disk D from the disk cartridge.

In addition, the first and second shutter units 211 and 212 include semicircular slits 211d and 212d, respectively, to form a hole at the center of the shutter 210 when the first and second shutter units 211 and 212 are closed. Therefore, when withdrawing the disk D, a user may conveniently withdraw the disk D by inserting a finger into the hole of the disk D. In other words, by arranging a hole on the shutter 210, a user may insert a finger deeper into the hole of the disk D and bend the finger to conveniently withdraw the disk D from the case 201. Alternatively, the semicircular slits 211d and 212d may be eliminated to prevent dusts to enter from the lower side of the shutter 210 and attaching to the recording surface of the disk D, allowing inconvenience in the withdrawal of the disk D.

The drawing and specification of the invention are provided for illustration only and are not used to limit the scope of the invention set forth in appended claims.

### Industrial Applicability

Advantages of a disk cartridge according to the present invention are as follows.

The peripherals of guide holes interfere in ends of support members to prevent a shutter from being deformed by external force and to firmly close the shutter.

Since the shutter in a case contacts only non-information region of a disk, the information region of the disk can be protected in opening and closing of an aperture.

In addition, since the rim portion of the disk is attached to a sealing member at the peripheral of an opening of the cover in the closed state of the shutter, a gap for inserting dusts is blocked to reduce a possibility that the recording surface of the disk is contaminated.

Moreover, the cover installed on a case is opened and closed rotatively to conveniently replace the disk, and the size of the opening on the cover is smaller than the diameter of the disk to safely store the disk without installing separation prevention members.

## Claims

1. A disk cartridge including a case (201) in which a disk (D) is stored; a cover (203) installed on the case (201) and having an opening (203a) opened to outside; a shutter (210) movably installed in the case between said disk (D) and said case (201) to open and close an aperture (202) formed in the case (201),
**characterised by** the disk cartridge comprising:
elongated guide holes (206) formed in the case along the trace of the shutter (210) and having peripheral positions (206a);
support members (207) formed on the shutter (201) to be guided into the elongated guide holes (206) and having an enlarged top end (207a) which extends over the peripheral portions (206a) of the guide holes in order to interfere with said peripheral portions, thereby preventing a movement of the shutter (210) toward the disk (D).

2. The disk cartridge of claim 1, wherein the shutter (210) includes first and second shutter units (211,212) attached to and separated from each other to open and close the aperture (202),
wherein a coupling groove (21 2a) is formed on one of the first and second shutter units (211,212) and a coupling protrusion (21 1 a) is formed on the other shutter unit (211,212) so that the coupling protrusion (211a) is inserted into the coupling groove (21 2a) in attaching the first and second shutter units (211,212) to each other.

3. The disk cartridge of claim 1, wherein the shutter (210) includes protrusion portions (220,230) for supporting the non-information region of the disk (D) at the external circumference of the disk (D) while having slant surfaces (221,231) at a predetermined angle,
wherein the disk (D) is lowered along the slant surfaces (221,231) in opening of the shutter (210), and
the disk (D) is elevated along the slant surfaces (221,231) in closing of the shutter (210) to be attached to the opening (203a) of the cover (203).

4. The disk cartridge of claim 3, wherein a sealing member (240) is installed on the peripheral of the opening (203a) so that the disk (D) is attached to the sealing member (240).

5. The disk cartridge of claim 4, wherein the sealing member (240) is formed of a material possible to be elastically transformed by receiving a force from the disk (D).

6. The disk cartridge of claim 5, wherein the sealing member (240) is formed of one of unwoven fabric and rubber.

7. The disk cartridge of claim 1, wherein the cover (203) is installed on the case (201) to open and close the case in a rotation manner.

8. The disk cartridge of claim 7, wherein the size of the opening (203a) is smaller than the area of the disk (D).

9. The disk cartridge of claim 1, wherein a protrusion (205) is formed on the case (201) to support the non-information region of the disk (D) at the inner circumference of the disk (D), which is lowered along the slant surfaces (221,231).

## Patentansprüche

1. Datenträgerkassette, enthaltend ein Gehäuse (201), in dem ein Datenträger (D) aufbewahrt ist; einen Deckel (203), der auf dem Gehäuse (201) montiert ist und eine nach außen weisende Öffnung aufweist; einen beweglich in dem Gehäuse zwischen dem Datenträger (D) und dem Gehäuse (201) zur Öffnung und Schließung einer in dem Gehäuse (201) ausgebildeten Apertur (202) montierten Verschluss (210), **dadurch gekennzeichnet, dass** die Datenträgerkassette Folgendes umfasst:
längliche Führungslöcher (206), die entlang der Spur des Verschlusses (210) in dem Gehäuse ausgebildet sind und periphere Abschnitte (206a) aufweisen;
Trägerglieder (207), die auf dem Verschluss (210) ausgebildet sind, in die länglichen Führungslöcher (206) zu führen sind und ein vergrößertes oberes Ende (207a) aufweisen, das sich über die peripheren Abschnitte (206) der Führungslöcher erstreckt, um in die peripheren Abschnitte einzugreifen, wodurch eine Bewegung des Verschlusses (210) in Richtung des Datenträgers (D) verhindert wird.

2. Datenträgerkassette nach Anspruch 1, wobei der Verschluss (210) eine erste und zweite Verschlusseinheit (211, 212) enthält, die zum Öffnen und Schließen der Apertur (202) miteinander verbunden und voneinander getrennt sind,
wobei eine Kupplungsnut (212a) auf der ersten oder zweiten Verschlusseinheit (211, 212) ausgebildet ist und ein Kupplungsvorsprung (211a) auf der anderen Verschlusseinheit (211, 212) ausgebildet ist, so dass beim Miteinanderverbinden der ersten und zweiten Verschlusseinheit (211, 212) der Kupplungsvorsprung (211a) in die Kupplungsnut (212a) eingeführt wird.

3. Datenträgerkassette nach Anspruch 1, wobei der Verschluss (210) Vorsprungsabschnitte (220, 230) zum Tragen des Nichtinformationsbereichs des Datenträgers (D) am äußeren Umfang des Datenträgers (D) enthält, während sie schräge Flächen (221, 231) mit einem vorbestimmten Winkel aufweisen,
wobei der Datenträger (D) beim Öffnen des Verschlusses (210) die schrägen Flächen (221, 231) entlang niedergelassen wird und
der Datenträger (D) beim Verschließen des Verschlusses (210) die schrägen Flächen (221, 231) entlang heraufbewegt wird, um mit der Öffnung (203a) des Deckels (203) verbunden zu werden.

4. Datenträgerkassette nach Anspruch 3, wobei ein Dichtungsglied (240) derart an der Peripherie der Öffnung (203a) montiert ist, dass der Datenträger (D) mit dem Dichtungsglied (240) verbunden ist.

5. Datenträgerkassette nach Anspruch 4, wobei das Dichtungsglied (240) aus einem Material gebildet ist, das unter Einwirkung einer Kraft vom Datenträger (D) elastisch verformt werden kann.

6. Datenträgerkassette nach Anspruch 5, wobei das Dichtungsglied (240) aus einem Vliesstoff oder Kautschuk gebildet ist.

7. Datenträgerkassette nach Anspruch 1, wobei der Deckel (203) derart auf dem Gehäuse (201) montiert ist, dass das Gehäuse drehend zu öffnen und zu verschließen ist.

8. Datenträgerkassette nach Anspruch 7, wobei die Größe der Öffnung (203a) kleiner als die Fläche des Datenträgers (D) ist.

9. Datenträgerkassette nach Anspruch 1, wobei ein Vorsprung (205) auf dem Gehäuse (201) ausgebildet ist, um den Nichtinformationsbereich des Datenträgers (D) am inneren Umfang des Datenträgers (D) zu tragen, der die schrägen Flächen (221, 231) entlang niedergelassen wird.

## Revendications

1. Cartouche de disque comportant un étui (201)
dans lequel est logé un disque (D) ; un couvercle (203) monté sur l'étui (201) et présentant une ouverture (203a) s'ouvrant sur l'extérieur ; un volet (210) monté de façon mobile dans le boîtier entre ledit disque (D) et ledit étui (201) pour ouvrir et fermer un orifice (202) formé dans l'étui (201),
**caractérisé en ce que** la cartouche de disque comprend :
des trous de guidage allongés (206) formés dans l'étui le long de la trace du volet (210) et ayant des parties périphériques (206a) ;
des éléments de support (207) formés sur le volet (201) de façon qu'il soit guidé à l'intérieur des trous de guidage allongés (206) et ayant une extrémité supérieure agrandie (207a) qui se prolonge au-dessus des parties périphériques (206a) des trous de guidage afin d'entrer en contact avec lesdites parties périphériques, pour ainsi empêcher tout mouvement du volet (210) vers le disque (D).

2. Cartouche de disque selon la revendication 1,
dans laquelle le volet (210) comporte des premier et deuxième unités de volet (211, 212) fixées l'une à l'autre et séparées l'une de l'autre pour ouvrir et fermer l'orifice (202),
dans laquelle une rainure de raccordement (212a) est formée sur l'une des première et deuxième unités de volet (211, 212) et une protubérance de raccordement (211a) est formée sur l'autre unité de volet (211, 212) de façon que la protubérance de raccordement (211a) soit insérée à l'intérieur de la rainure de raccordement (212a) lors de la fixation l'une à l'autre des première et deuxième unités de volet (211, 212).

3. Cartouche de disque selon la revendication 1,
dans laquelle le volet (210) comporte des parties formant protubérances (220, 230) servant de support à la région du disque (D) ne contenant pas d'informations sur la circonférence externe du disque (D) tout en ayant des surfaces inclinées (221, 231) d'un angle prédéterminé,
dans laquelle le disque (D) est descendu le long des surfaces inclinées (221, 231) lors de l'ouverture du volet (210), et
le disque (D) est soulevé le long des surfaces inclinées (221, 231) lors de la fermeture du volet (210) afin qu'il soit fixé à l'ouverture (203a) du couvercle (203).

4. Cartouche de disque selon la revendication 3,
dans laquelle un élément d'étanchéité (240) est monté sur la périphérie de l'ouverture (203a) afin que le disque (D) soit fixé à l'élément d'étanchéité (240).

5. Cartouche de disque selon la revendication 4,
dans laquelle l'élément d'étanchéité (240) est formé d'un matériau se prêtant à une transformation élastique lorsqu'il est soumis à une force exercée par le disque (D).

6. Cartouche de disque selon la revendication 5,
dans laquelle l'élément d'étanchéité (240) est formé de l'un d'un tissu non tissé et d'un caoutchouc.

7. Cartouche de disque selon la revendication 1,
dans laquelle le couvercle (203) est monté sur l'étui (201) pour ouvrir et fermer l'étui par rotation.

8. Cartouche de disque selon la revendication 7,
dans laquelle la taille de l'ouverture (203a) est inférieure à la superficie du disque (D).

9. Cartouche de disque selon la revendication 1,
dans laquelle une protubérance (205) est formée sur l'étui (201) de façon à supporter la région du disque (D) ne contenant pas d'informations sur la circonférence interne du disque (D), qui est descendu le long des surfaces inclinées (221, 231).
